# EUROPÄISCHE PATENTSCHRIFT

(11) **EP 1 956 754 B1**
(45) Veröffentlichungstag und Bekanntmachung des Hinweises auf die Patenterteilung: **07.04.2010**
(21) Anmeldenummer: 07002584.6
(22) Anmeldetag: 07.02.2007
(51) Int. Cl.: H04L 12/28, H02J 13/00

(54) **Bediengerät der Gebäudesystemtechnik**
Control device for building systems technology
Appareil de commande de lingénierie des systèmes de bâtiments

(43) Veröffentlichungstag der Anmeldung: 13.08.2008
(73) Patentinhaber: ABB AG, 68309 Mannheim (DE)
(72) Erfinder: Zierach, Falk, Dipl.-Ing., 58513 Lüdenscheid (DE); Quitmann, Olav, Dipl.-Ing., 59846 Sundern (DE); Dörstel, Bernhard, Dipl.-Ing., 50321 Brühl (DE); Grams, Alexander, Dipl.-Wirtschaftsingenieur, 58285 Gevelsberg (DE)

(56) Entgegenhaltungen:
- WO-A-2006/029215
- US-A1- 2003 040 813
- US-A1- 2003 198 938
- US-B1- 6 581 846

## Beschreibung

Die Erfindung bezieht sich auf ein Bediengerät der Gebäudesystemtechnik gemäß dem Oberbegriff des Anspruchs 1. Eine Anwendung kann bei Bedien- und Anzeigegeräten (Sensoren, Taster, Schalter, Displays) erfolgen, die zur Steuerung von Funktionen im Gebäude genutzt werden.

Aus der DE 198 42 790 A1 ist ein Verfahren zur Umschaltung von Bedienebenen einer aus mehreren Tasten und Leuchtdioden zusammengesetzten Tastsensoreinheit eines Installationsbusses der Gebäudesystemtechnik bekannt. Es erfolgt eine elektrische Umschaltung von einer Bedienebene in eine weitere Bedienebene durch gleichzeitiges und wahlweises Betätigen von mehreren Tasten. Hierdurch kann eine Taste der Tast-sensoreinheit die Funktionen Schalten, Dimmen, Jalousiesteuerung, Lichtszenensteuerung, Wertegeber und andere ausführen.

Aus der US 2003/040813 A1 ist ein Haus-Automatisierungs-System bekannt, bei dem Schalteinheiten jeweils eine LED enthalten, welche in unterschiedlichen Farben aufleuchten kann, um derart den momentanen Zustand der Schalteinheit anzuzeigen, z. B. zeigt eine bestimmte Farbe an, dass sich die Schalteinheit im einem Programmier-Status befindet und eine andere Farbe zeigt an, dass sich die Schalteinheit im Normal-Betriebszustand befindet.

Aus der US 2003/1 98938 A1 ist Haus-Automatisierungs-System bekannt, welches dem Anwender eine Fernsteuerung unterschiedlicher Geräte ermöglicht. Dabei können unterschiedlichen Geräten oder unterschiedlichen Räumen, in denen sich die Geräte befinden, unterschiedliche Farben zugeordnet werden.

Aus der WO 20061029215 A ist ein auf Lichtanzeigen basierender Konfigurationsführer für elektronische Schnittstellen bekannt. Unterschiedlich gefärbte Lichtanzeigen repräsentieren im Hinblick auf Anschluss-Schnittstellen erforderliche unterschiedliche Aktionen. Auch sind mit den unterschiedlichen Lichtanzeigen unterschiedliche Funktionen von Medien-Komponenten darstellbar.

Bediengeräte der Gebäudesystemtechnik mit Mehrfachtastern oder mit einem Touch Screen sind allgemein bekannt. Dabei erfolgt eine Anzeige durch Aufleuchten einer im Taster integrierten oder neben dem Taster angeordneten LED oder durch ein Symbol auf dem Bildschirm. Die Anzeige per LED ist nicht aussagekräftig, da aus größerer Entfernung (einige Meter) nicht erkannt werden kann, was die einzelne LED einer Tastsensoreinheit signalisiert. Auch die Bildschirmanzeige kann nur aus geringer Entfernung abgelesen werden.

Der Erfindung liegt die Aufgabe zugrunde, ein Bediengerät der Gebäudesystemtechnik der eingangs genannten Art anzugeben, bei welchem auch aus größerer Entfernung die Funktion des Bedienelements des Bediengeräts für einen Anwender erkennbar ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass es mittels des vorgeschlagenen Bediengeräts der Gebäudesystemtechnik ermöglicht wird, einer beliebigen Steuerungsfunktion eine Farbe zuzuordnen, so dass der Anwender bereits bei Betrachtung des Bediengerätes aus größerer Entfernung erkennt, welche Funktion über das Bediengerät konkret aufgerufen werden kann. Die Farbwidergabe erfolgt dabei sowhol über entsprechende LEDs (z. B. RGB-LED) als auch zusätzlich über ein Farbdisplay.

Eine beispielhafte Zuordnung der Farbe zu einer Gebäudefunktion kann beispielsweise wie folgt gestaltet sein:
- Farbe rot: Beleuchtung steuern,
- Farbe grün: Jalousie steuern,
- Farbe blau: Heizungsfunktion steuern.

Bei Betrachtung einer Tastsensoreinheit mit beispielsweise drei Wippen, bei der sich in jeder Wippe eine RGB-LED-Anordnung (Rot/Grün/Blau-Leuchtdioden-Anordnung) befindet, kann der Nutzer somit sofort erkennen,
- dass die obere Wippe zur Steuerung der Beleuchtung dient, da die zugeordnete LED rot leuchtet,
- dass die mittlere Wippe zur Steuerung der Jalousie dient, da die zugeordnete LED grün leuchtet,
- dass die untere Wippe zur Steuerung der Heizung dient, da die zugeordnete LED blau leuchtet.

Bei Einsatz eines Drehreglers als Bedienelement weiß der Anwender unmittelbar,
- dass er das Licht schalten kann oder dimmen Kann, wenn der Leuchtring um aen Drehregler rot leuchtet,
- dass er die Jalousie herunterfahren /hochfahren kann, wenn der Leuchtring um den Drehregler grün leuchtet,
- dass er Heizungsfunktionen ansteuern kann, wenn der Leuchtring um den Drehregler blau leuchtet.

Dabei kann der Anwender beispielsweise durch Drücken auf den Drehregler die gewünschte Funktion selbst einstellen bzw. von einer Funktion in eine andere wechseln. Somit wird aus einem Drehregler ein sehr einfach bedienbares Multifunktionsgerät. Zusätzlich ist der Drehregler auch mit einem Anzeigeelement, z. B. Display verbunden, um somit die Bedienung und Farbsteuerung zu unterstützen.

Die Zuordnung der Farbe zu der Funktion ist in allen Fällen entweder fest kodiert oder frei konfigurierbar, d. h. die Zuordnung der Farbe bzw. des Farbtons zur Funktion ist flexibel und kann vom Anwender selbst vorgegeben werden.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine erste Ausführungsform eines Multifunktions-Bediengerätes der Gebäudesystemtechnik,
- Fig. 2: eine zweite Ausführungsform eines Multifunktions-Bediengerätes der Gebäudesystemtechnik,
- Fig. 3: eine detaillierte Darstellung einzelner Baukomponenten einer Tastsensoreinheit.

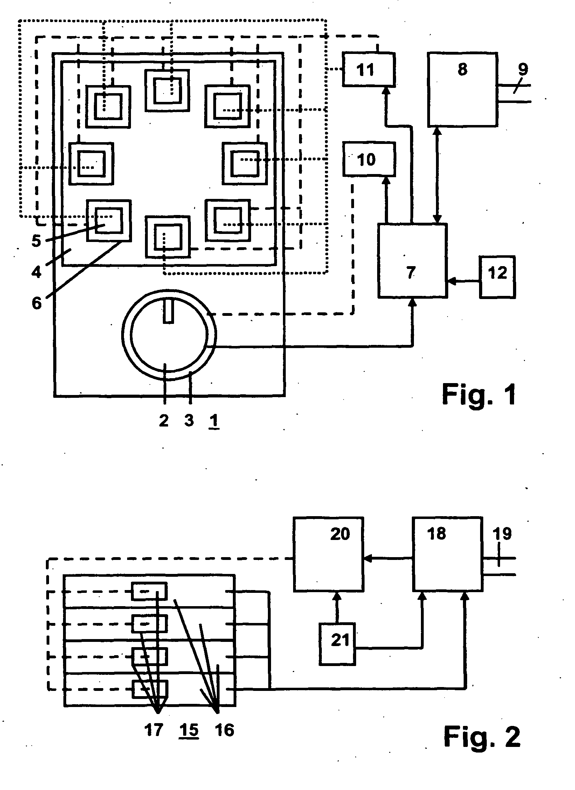

In Fig. 1 ist eine erste Ausführungsform eines Multifunktions-Bediengerätes der Gebäudesystemtechnik dargestellt. Das Multifunktions-Bediengerät 1 weist einen Drehregler als Bedienelement 2 auf, welcher mit einer LED-Leuchtanzeige 3 in Form eines Leuchtrings umgeben ist. Oberhalb des Bedienelements 2 ist ein Farbdisplay 4 angeordnet, welches eine Vielzahl von aktivierbaren / deaktivierbaren Bildschirm-Symbolen 5 aufweist, wobei jedes Bildschirm-Symbol 5 gegebenenfalls zusätzlich von einer separaten Farbdisplay-Leuchtanzeige 6 umgeben ist oder anderweitig farblich hervorgehoben wird. Im gezeigten Beispiel sind acht unterschiedliche Bildschirm-Symbole 5 vorgesehen. Bei Aktivierung wird das entsprechende Bildschirm-Symbol 5 auf dem Farbdisplay 4 je nach Funktionszugehörigkeit entsprechend farblich hervorgehoben, die weiteren Bildschirm-Symbole sind farblich nicht hervorgehoben aber sichtbar.

Die Ausgangssignale des Bedienelements 2 gelangen zu einem Mikrocontroller 7, der vorzugsweise bidirektional mit einem Busankoppler 8 verbunden ist und der eingangsseitig Signale einer Vorort-Vorgabeeinheit 12 empfängt sowie ausgangsseitig eine LED-Ansteuereinheit 10 und eine Farbdisplay-Ansteuereinheit 11 beaufschlagt. An den Busankoppler 8 ist ein Bus 9 (Installationsbus) der Gebäudesystemtechnik angeschlossen, wodurch Geräte des Gebäudes über Aktoren in gewünschter Art und Weise angesteuert (ferngesteuert) werden können.

Mit Hilfe des Multifunktionsgerätes 1 können unterschiedliche Gebäudefunktionen ausgeübt werden. Unter Anderem kann das Multifunktionsgerät 1 wahlweise dienen
- zur Steuerung von unterschiedlicher Beleuchtung,
- zur Steuerung von unterschiedlichen Jalousien,
- zur Steuerung von unterschiedlichen Heizungsfunktionen.

Welche der möglichen Gebäudefunktionen durch Drehen des Bedienelements 2 konkret ausgeübt werden soll, kann durch Betätigung der Vorort-Vorgabeeinheit 12 bestimmt werden. Die Vorort-Vorgabeeinheit 12 kann in Form einer oder mehrerer Zusatztasten realisiert sein. Alternativ kann der Drehregler selbst diese Vorort-Vorgabeeinheit 12 repräsentieren bzw. beinhalten, wenn er außer der Drehfunktion zusätzlich eine Drucktastenfunktion aufweist oder zusätzlich kippbar gelagert ist (ähnlich wie ein Joystick). Durch sukzessives Drücken können derart nacheinander die möglichen Gebäudefunktionen aufgerufen werden.

In Abhängigkeit des von der Vorort-Vorgabeeinheit 12 abgegebenen Signals beaufschlagt der Mikrocontroller 7 die LED-Ansteuereinheit 10 derart, dass die LED-Leuchtanzeige 3 z. B.
- rot aufleuchtet, wenn eine Beleuchtung angesteuert werden soll oder
- grün aufleuchtet, wenn eine Jalousie angesteuert werden soll oder
- blau aufleuchtet, wenn eine Heizungsfunktion angesteuert werden soll.

Gleichzeitig mit der Ansteuerung der LED-Ansteuereinheit 10 beaufschlagt der Mikrocontroller 7 die Farbdisplay-Ansteuereinheit 11 in Abhängigkeit des von der Vorort-Vorgabeeinheit 12 abgegebenen Signals derart, dass die Farbdisplay-Leuchtanzeige 6 eines "bestimmten" aktivierten Bildschirm-Symbols 5 z. B.
- rot aufleuchtet, wenn eine Beleuchtung angesteuert werden soll oder
- grün aufleuchtet, wenn eine Jalousie angesteuert werden soll oder
- blau aufleuchtet, wenn eine Heizungsfunktion angesteuert werden soll.

Gleichzeitig wird selbstverständlich auch das "bestimmte" Bildschirm-Symbol 5 mittels der Farbdisplay-Ansteuereinheit 11 aktiviert und ist somit im Farbdisplay 4 farblich hervorgehoben, während die weiteren Bildschirm-Symbole 5 farblich nicht hervorgehoben aber erkennbar sind.

In Fig. 2 ist eine zweite Ausführungsform eines Multifunktions-Bediengerätes der Gebäudesystemtechnik dargestellt. Als Multifunktions-Bediengerät dient hierbei eine Tastsensoreinheit 15, welche beispielsweise vier Wippen 16 aufweist, wobei in jeder Wippe 16 eine LED-Leuchtanzeige 17 integriert ist. Die Ausgangssignale der Wippen 16 (respektive der von den Wippen 16 beaufschlagten Schalter, insbesondere Mikroschalter) gelangen zu einem Busankoppler 18, an welchen ein Bus 19 (Installationsbus der Gebäudesystemtechnik) angeschlossen ist, wodurch Geräte des Gebäudes über Aktoren in gewünschter Art und Weise angesteuert werden können.

Mit Hilfe der Tastsensoreinheit 15 können unterschiedliche Gebäudefunktionen ausgeübt werden. Unter Anderem kann die Tastsensoreinheit 15 dienen
- zur Steuerung einer Beleuchtung,
- zur Steuerung einer Jalousie,
- zur Steuerung einer Heizungsfunktion.

Welche der Gebäudefunktionen durch Betätigung einer bestimmten Wippe 16 ausgeübt werden soll, kann mittels einer Vorort-Vorgabeeinheit 21 separat für jede Wippe vorgegeben werden. Die Funktion der Wippen wird über eine PC Software festgelegt und dann in den Busankoppler, programmiert. Mit dem Aufstecken des Bedienelements auf den Busankoppler übernimmt es dann die programmierte Funktion. Dies erfolgt zweckmäßig vor Inbetriebnahme der Gebäudesystemtechnik und bleibt üblicherweise während des Betriebes unverändert. In Abhängigkeit des von der Vorort-Vorgabeeihheit 21 an den Busankoppler 18 sowie an eine LED-Ansteuereinheit 20 abgegebenen Signals beaufschlagt die LED-Ansteuereinheit 20 die LED-Leuchtanzeigen 17 der einzelnen Wippen 16 derart, dass die LED-Leuchtanzeige 17 z. B.
- rot aufleuchtet, wenn durch die betreffende Wippe 16 eine Beleuchtung angesteuert werden kann,
- grün aufleuchtet, wenn durch die betreffende Wippe 16 eine Jalousie angesteuert werden kann,
- blau aufleuchtet, wenn durch die betreffende Wippe 16 eine Heizungsfunktion angesteuert werden kann.

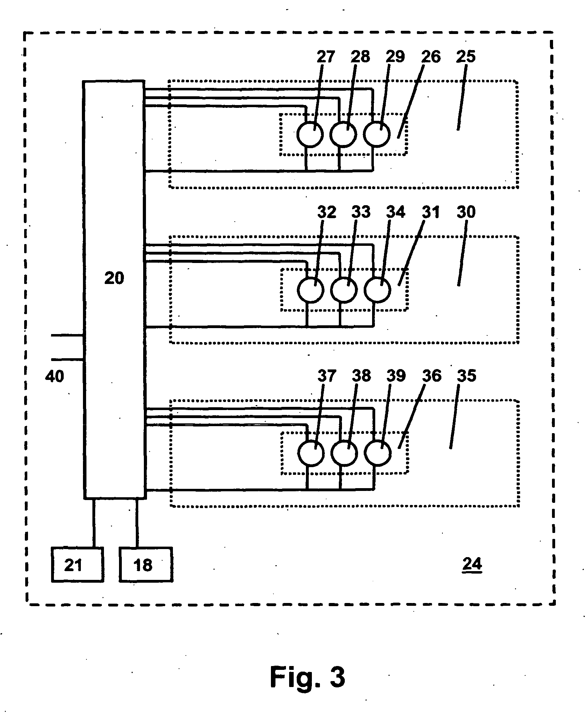

In Fig. 3 ist eine detaillierte Darstellung einzelner Baukomponenten einer Tastsensoreinheit gezeigt. Es ist eine Tastsensoreinheit 24 mit drei Wippen 25 bzw. 30 bzw. 35 zu erkennen, wobei in den Wippen 25 bzw. 30 bzw. 35 jeweils eine LED-Leuchtanzeige 26 bzw. 31 bzw. 36 integriert ist. Jede LED-Leuchtanzeige 26 bzw. 31 bzw. 36 weist eine rote LED 27 bzw. 32 bzw. 37, eine grüne LED 28 bzw. 33 bzw. 38 und eine blaue LED 29 bzw. 34 bzw. 39 auf. Die Ansteuerung/Energieversorgung dieser Leuchtdioden erfolgt über die LED-Ansteuereinheit 20 in Abhängigkeit von den Signalen der Vorort-Vorgabeeinheit 21 oder des Busankopplers 18. Selbstverständlich ist die LED-Ansteuereinheit 20 an eine Energieversorgung 40 angeschlossen, um die LEDs entsprechend speisen zu können. Vorzugsweise wird die Energie für die LEDs aus dem Bus bezogen und über den Busankoppler an das aufgesteckte Bedienelement mit den LEDs weitergegeben.

Wie aus den vorstehenden Erläuterungen hervorgeht, können die LED-Leuchtanzeigen 26, 31, 36 wahlweise in roter, grüner oder blauer Farbe aufleuchten, um die entsprechend aktivierte Funktion der zugehörigen Wippe zu signalisieren. Darüber hinaus können auch Mischfarben in einer LED-Leuchtanzeige 26, 31, 36 aufleuchten indem gleichzeitig zwei LEDs einer LED-Leuchtanzeige angesteuert werden. Durch Ansteuerung aller drei LEDs einer LED-Leuchtanzeige leuchtet weißes Licht auf. Somit ist es in einfacher Weise möglich, mehr als drei Funktionen farblich unterschiedlich anzuzeigen. Dies gilt selbstverständlich auch für die Ausführungsbeispiele gemäß den Fig. 1 und 2.

Selbstverständlich ist die Erfindung nicht auf die vorstehend behandelte Vorrichtung zum Erzeugen unterschiedlich farbigen Lichts mittels LEDs beschränkt, sondern es können alternativ andere allgemein bekannte Vorrichtungen / Verfahren zum Erzeugen von unterschiedlich farbigem Licht mittels LEDs eingesetzt werden.

### Bezugszeichenliste:

- 1: Multifunktions-Bediengerät
- 2: Bedienelement (Drehregler)
- 3: LED-Leuchtanzeige (Leuchtring)
- 4: Farbdisplay
- 5: Bildschirm-Symbole
- 6: Farbdisplay-Leuchtanzeigen
- 7: Mikrocontroller
- 8: Busankoppler
- 9: Bus
- 10: LED-Ansteuereinheit
- 11: Farbdisplay-Ansteuereinheit
- 12: Vorort-Vorgabeeinheit
- 13: ---
- 14: ---
- 15: Tastsensoreinheit (Multifunktions-Bediengerät)
- 16: Wippen
- 17: LED-Leuchtanzeigen
- 18: Busankoppler
- 19: Bus
- 20: LED-Ansteuereinheit
- 21: Vorort-Vorgabeeinheit
- 22: ---
- 23: ---
- 24: Tastsensoreinheit
- 25: erste Wippe
- 26: LED-Leuchtanzeige
- 27: rote LED
- 28: grüne LED
- 29: blaue LED
- 30: zweite Wippe
- 31: LED-Leuchtanzeige
- 32: rote LED
- 33: grüne LED
- 34: blaue LED
- 35: dritte Wippe
- 36: LED-Leuchtanzeige
- 37: rote LED
- 38: grüne LED
- 39: blaue LED
- 40: Energieversorgung

## Patentansprüche

1. Bediengerät (1, 15, 24) der Gebäudesystemtechnik mit mindestens einem Bedienelement (2, 16, 25, 30, 35), welchem wahlweise unterschiedliche Funktionen zuordenbar sind und welches eine dem Bedienelement (2, 16, 25, 30, 35) zugeordnete LED-Leuchtanzeige (3, 17, 26, 31, 36) aufweist, wobei die LED-Leuchtanzeige (3, 17, 26, 31, 36) mittels einer LED-Ansteuereinheit (10, 20) in Abhängigkeit der dem Bedienelement (2, 16, 25, 30, 35) konkret zugeordneten Funktion in der Weise ansteuerbar ist, dass einer bestimmten Funktion eine bestimmte Farbe der LED-Leuchtanzeige (3, 17, 26, 31, 36) zugeordnet ist, **dadurch gekennzeichnet, dass** zusätzlich ein Farbdisplay (4) mit unterschiedlichen, den einzelnen Funktionen zugeordneten und in Abhängigkeit der konkret ausgewählten Funktion aktivierten oder deaktivierten Bildschirm-Symbolen (5) vorgesehen ist, welchen jeweils eine mittels einer Farbdisplay-Ansteuereinheit (11) ansteuerbaren Farbdisplay-Leuchtanzeige (6) zugeordnet ist, deren Farbe der Farbe der LED-Leuchtanzeige (3, 17, 26, 31, 36) entspricht.

2. Bediengerät nach Anspruch 1, **dadurch gekennzeichnet, dass** die einem Bedienelement (2, 16, 25, 30, 35) konkret zugeordnete Funktion der LED-Ansteuereinheit (10, 20) über eine Vorort-Vorgabeeinheit (12, 21) vorgebbar ist.

3. Bediengerät nach Anspruch 2, **dadurch gekennzeichnet, dass** die Vorort-Vorgabeeinheit (12, 21) in Form einer Zusatztaste realisiert ist.

4. Bediengerät nach Anspruch 2, **dadurch gekennzeichnet, dass** das Bedienelement (2) selbst die Vorort-Vorgabeeinheit (12) beinhaltet.

5. Bediengerät nach Anspruch 1, **dadurch gekennzeichnet, dass** die einem Bedienelement (2, 16, 25, 30, 35) konkret zugeordneten Funktion der LED-Ansteuereinheit (10, 20) über einen Bus der Gebäudesystemtechnik und einen Busankoppler (8, 18) vorgebbar ist.

6. Bediengerät nach einem der vorstehenden Ansprüche, **dadurch gekennzeichnet, dass** eine RGB-LED-Anordnung als LED-Leuchtanzeige (3, 17, 26, 31, 36) verwendet ist.

## Claims

1. A control device (1, 15, 24) of building systems technology, comprising at least one control element (2, 16, 25, 30, 35) which can optionally be assigned different functions and which comprises an LED illuminated display (3, 17, 26, 31, 36) which is associated with the control element (2, 16, 25, 30, 35), with the LED illuminated display (3, 17, 26, 31, 36) being triggerable by means of an LED triggering unit (10, 20) depending on the function associated specifically to the control element (2, 16, 25, 30, 35) in such a way that a specific function is assigned to a specific color of the LED illuminated display (3, 17, 26, 31, 36), **characterized in that** a color display (4) is additionally provided with different screen symbols (5) which are assigned to the individual functions and which are activated or deactivated depending on the specifically chosen function, to which symbols each is assigned a color illuminated display (6) which can be triggered by means of a color-display triggering unit (11) and the color of which corresponds to the color of the LED illuminated display (3, 17, 26, 31, 36).

2. A control device according to claim 1, **characterized in that** the function of the LED triggering device (10, 20) which is specifically assigned to a control element (2, 16, 25, 30, 35) can be predetermined by means of an on-site setting unit (12, 21).

3. A control device according to claim 2, **characterized in that** the on-site setting unit (12, 21) is realized in the form of an additional button.

4. A control device according to claim 2, **characterized in that** the control element (2) contains the on-site setting unit (12) itself.

5. A control device according to claim 1, **characterized in that** the function of the LED triggering unit (10, 20) which is specifically assigned to a control element (2, 16, 25, 30, 35) can be predetermined via a bus of buildings systems technology and a bus coupler (8, 18).

6. A control device according to one of the preceding claims, **characterized in that** an RGB LED arrangement is used as an LED illuminated display (3, 17, 26, 31, 36).

## Revendications

1. Appareil de commande (1, 15, 24) de domotique avec au moins un élément de commande (2, 16, 25, 30, 35) auquel différentes fonctions peuvent être affectées au choix et qui possède un indicateur lumineux à DEL (3, 17, 26, 31, 36) associé à l'élément de commande (2, 16, 25, 30, 35), dans lequel l'indicateur lumineux à DEL (3, 17, 26, 31, 36) peut être activé au moyen d'une unité d'activation des DEL (10, 20) selon la fonction attribuée en l'occurrence à l'élément de commande (2, 16, 25, 30, 35), de telle façon qu'une certaine couleur de l'indicateur lumineux à DEL (3, 17, 26, 31, 36) soit associée à une fonction donnée, **caractérisé en ce qu'**il est prévu en outre un afficheur en couleurs (4) avec différents symboles à l'écran (5) qui sont associés aux différentes fonctions et activés ou désactivés selon la fonction sélectionnée, dont chacun est associé à un indicateur lumineux sur l'afficheur couleurs (6) pouvant être activé au moyen d'une unité d'activation de l'afficheur couleurs (11) et dont la couleur correspond à la couleur de l'indicateur lumineux à DEL (3, 17, 26, 31, 36).

2. Appareil de commande selon la revendication 1, **caractérisé en ce que** la fonction de l'unité d'activation des DEL (10, 20) associée concrètement à un élément de commande (2, 16, 25, 30, 35) peut être prédéterminée par une unité de paramétrage locale (12, 21).

3. Appareil de commande selon la revendication 2, **caractérisé en ce que** l'unité de paramétrage locale (12, 21) est réalisée sous la forme d'un bouton supplémentaire.

4. Appareil de commande selon la revendication 2, **caractérisé en ce que** l'élément de commande (2) proprement dit contient l'unité de paramétrage locale (12).

5. Appareil de commande selon la revendication 1, **caractérisé en ce que** la fonction de l'unité d'activation des DEL (10, 20) associée en l'occurrence à un élément de commande (2, 16, 25, 30, 35) peut être déterminée par l'intermédiaire d'un bus de domotique et d'un coupleur de bus (8, 18).

6. Appareil de commande selon l'une des revendications précédentes, **caractérisé en ce qu'**une disposition de DEL RVB est utilisée comme indicateur lumineux à DEL (3, 17, 26, 31,36).
